# EUROPEAN PATENT SPECIFICATION

(11) **EP 0 378 520 B1**
(45) Date of publication and mention of the grant of the patent: **09.08.1995**
(21) Application number: 90830007.2
(22) Date of filing: 05.01.1990
(51) Int. Cl.: F16K 5/20, F16K 5/08

(54) **Ball valve with bi-directional lock ring**
Kugelventil mit in zwei Richtungen wirkendem Feststellring
Soupape sphérique avec anneau de fixation dans deux directions

(30) Priority: 13.01.1989 IT 1240789
(43) Date of publication of application: 18.07.1990
(73) Proprietor: F.I.P. FORMATURA INIEZIONE POLIMERI S.P.A., I-16148 Genoa (IT)
(72) Inventor: Catanzano, Andrea, I-16146 Genoa (IT); Tropea, Gian Luca, I-16148 Genoa (IT)
(74) Representative: Perani, Aurelio

(56) References cited:
- EP-A- 209 633
- EP-A- 225 752
- EP-A- 0 051 993
- CH-A- 568 510
- DE-C- 3 321 819
- US-A- 4 605 199

## Description

Ball valves according to the preamble of claim 1 are known.

This type of arrangement allows the valve to be removed in order to check the state of wear of the gaskets without dismantling the two pipes connected to the valve. In some cases, however, it may be necessary to dismantle the pipe connected downstream from the valve, with the valve closed, while there is still fluid under pressure in the other pipe, upstream from the valve. This requirement forces the valve to be arranged in such a way that the bushing supporting the gasket is always positioned on the upstream side, in respect of the pressure. If this is not done, said bushing, the relevant gasket and the ball-type plug itself might be forced out of the valve body by the pressure existing on the other side of the valve.

According to a previous innovation by the owner of this invention (IT-U- 198 695 & US-A- 4 605 199), these problems were overcome by adding a retaining ring, screwed inside the valve body to create a ring-shaped beat for the bushing supporting the gasket mentioned above. In this way, the valve may be fitted indifferently in either direction, and it is always possible to disassemble one of the two lengths of pipe when the second is under pressure. This solution, however, has the drawback that it is not possible to prevent jamming of the plug in an open or closed position, by effect of the forces deriving from a heat-dependent deformation of the pipes connected to the valve.
The friction forces which may thus develop on the gaskets sealing the plug lead to an increase of the torque needed to rotate the latter.

According to this invention a ball valve of the type described is equipped with a bi-directional lock ring, according to the characterizing part of claim 1, allowing disassembly of the pipe downstream from the valve, with the valve closed, without prejudice for the valve's sealing, which is capable of absorbing possible axial loads due to expansion of the pipes.
Figure 1 shows a vertical cross-section of the valve according to the invention, in the mounted position:
Figure 2 is an enlargement of the supporting bushing and bi-directional lock ring, connected together before being inserted inside the valve body.

With specific reference to the figures listed above, 10 is the body or housing of the valve, which has a basically cylindrical outer shape 11, and at its two ends has threaded parts 12, 13 for two tightenable ring nuts 20, 20′. Each of said ring nuts 20 and 20′ has a tubular part 21, 21′ fitted internally with a threaded part suitable for engaging the threads 12 and 13, and at one end each has a flange 23, 23′ facing the inside of the ring nut and the purpose of which is to engage the outer flanges 31, 31′ of the pipes 30, 30′.

Also in a known manner, each pipe 30, 30′ may made in one piece with its outer flange 31, 31′; in a known manner, in most cases the pipe 30, 30′ consists of a tube 32, 32′ engaged inside an end bushing 33, 33′ fitted with said outer flange 31, 31′. The tube 32, 32′ may be joined to the end bushing 33, 33′ in different ways: they may be screwed to one another, bonded or welded.

Internally, the valve body 10 has at one end, on the left-hand side in the figures, a bore 14 extending as far as the central part of the valve body. At the other end, on the right-hand side of the figure, said bore is partly closed by a ring-shaped flange 15, facing towards the axis of the valve body, and which acts as a beat for the front end 34 of the pipe 30. Said front end 34 of the pipe 30 rests on the front end 16 of the valve body.

In a known manner, in the front surface 16 of the valve body, located against the internal flange 15, there is a ring-shaped groove 17, capable of housing a sealing O-ring. The valve body 10 is equipped with a radial hole for the control stem 40 of the plug 41, consisting of a ball with a diametrical hole 42 and having an impression capable of accommodating a cylindrical spigot 44 with a non-circular cross-section, protruding from the bottom of the stem 40.

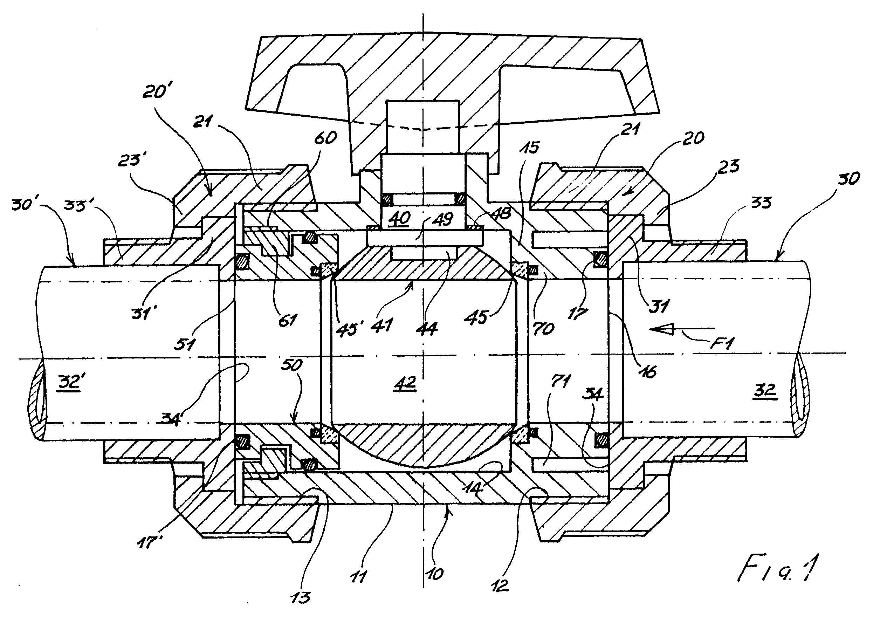

As shown in figure 1, between the flange 15 and the plug 41 there is a ring-shaped sealing gasket 45 housed in a ring-shaped step in the flange 15 of the valve body 10. It is known that in ball valves of this type, the second ring-shaped gasket 45′ of the ball-type plug 41, that is to say the gasket shown on the left-hand side of the figure, is pushed against the ball-shaped plug 41 by the second tightenable ring nut 20′, which pushes the front end 34′ of the flange 31′ of the pipe 30′ against the base 51 of a bushing 50 supporting the gasket 45′. On the axially external front surface 51 of the supporting bushing 50 of the gasket 45′, there is a ring-shaped groove 17′ housing a corresponding sealing ring.

Therefore, with specific reference to figure 1, the valve has, in this order, the following known elements: the pipe 30, the flange 15 of the valve body 10, the sealing gasket 45, the ball-shaped plug 41, the sealing gasket 45′, the bushing 50 supporting said gasket, and the pipe 30′. In addition to said known elements, there are also the tightenable ring nuts 20 and 20′, also typical of these known ball valves.

According to the invention, the end of the bore 14 opposite to the flange 15 has an inner thread 60 capable of engaging an externally threaded lock ring 61 equipped with two impressions, diametrically opposite to one another and not shown in the figure, allowing it to be rotated by means of a suitable tool. In order to allow the lock ring 61 to fit, on the outer surface of the supporting bushing 50 there is a ring-shaped groove 52.

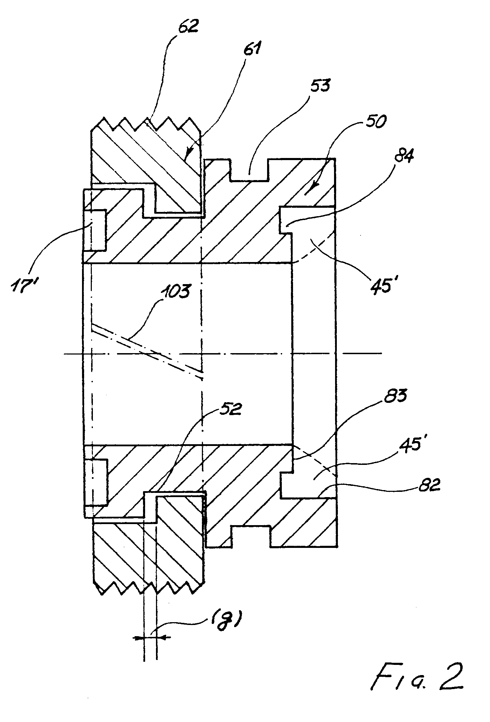

So as to allow assembly of the lock ring 61 inside the ring-shaped groove 52, said ring is cut, as indicated by the dashed line 103 in figure 2. This cut makes it possible to open out the ring 61 elastically until it is positioned axially in correspondence with the groove 52. At this point, the ring 61 is allowed to return elastically to its normal dimensions: the ring positions itself inside the groove 52, inside which it may move with a slight axial clearance.

Externally, the lock ring 61 has a thread 62 suitable to engage the internal thread 60 of the bore 14. The axial width of the lock ring 61 is smaller than the axial width of the groove 52. On the outer surface of the supporting bushing 50, next to the groove 52 and axially internal to it, there is a second ring-shaped groove 53, capable of containing an O-ring (see fig. 1), working against the inner surface of the bore 14.

The lock ring 61 allows the valve to be fitted in any position in relation to the flow direction of the liquid, in case either one of the pipes 30 or 30′ has to be disassembled with the valve closed. Indeed, if the flow direction of the fluid passing through the valve is the direction indicated by the arrow F1 in figure 1, on closing the valve by turning the ball-shaped plug 41, it is possible, if required, to disassemble the downstream pipe 30′ with no risk of the bushing 50 supporting the gasket 45′ being expelled from the valve body; this is achieved by means of the lock ring 61 screwed into the thread 60 of the valve body 10.

Assembly of the various components of the valve is carried out as described below.
The upstream pipe 30, formed by the bushing 33 and by the pipe 30, is pushed against the end-surface 16 of the flange 15 by means of the tightenable ring nut 20 which is screwed into the outer thread 12. The stem 40 is then inserted inside the valve body through the radial hole provided for this purpose in the valve body 10. Then the plug 41 is inserted into the valve body 10. The plug has on top a suitable prism-shaped impression into which the spigot 44 fits. At this point, the supporting bushing 50, to which the lock ring 61 has already been fitted, is inserted into the valve body 10. Axial positioning of the supporting bushing 50 is defined by the extent to which the lock ring 61 is screwed into the thread 60. If the lock ring 61 is screwed in by means of a calibrated tool, it is possible to gauge the axial strength with which the two ring-shaped gaskets 45 and 45′ are pressed against the plug 41. Then the pipe 30, formed by the pipe 32′ and the end-bushing 33′ is placed against the outer end surface 51 of the supporting bushing 50.

The tightness of the ring nut 20′ in the thread 13 of the valve body 10 will allow the end surface 34′ of the pipe 30′ to be locked against the end surface 51 of the supporting bushing 50. It is important to note that according to this invention, excessive tightening of the ring nut 20′ in the thread 13 cannot cause jamming of the plug 41 between gaskets 45 and 45′. This is because the axial position of the lock ring 61 prevents any axial movement of the supporting bushing 50 after recovery of any clearance existing between the lock ring 61 and the surfaces of the ring-shaped groove 52. This clearance has been exaggerated in figure 2.

Since the components 10, 40, 41, 50 and 61 may be assembled in a workshop, while the remaining elements 30, 20, 20′ and 30′ may be assembled subsequently on site, the valves may leave the workshop with the gaskets compressed to the exact required values, and subsequent assembly of the pipes 30 and 30′ and of the ring nuts 20 and 20′, even if carried out by less qualified personnel, cannot alter arbitrarily the degree of compression of the gaskets 45 and 45′.

This invention also provides another substantial advantage: the valve claimed here may be used in environments subject to extreme temperature changes. This means that the pipes may undergo heat-dependent expansion and compression. Usual valves prevent loosening of the gaskets 45 and 45′ consequent to contraction of the pipes thanks to the presence of the ring nuts 20 and 20′. They are, however, not capable of preventing positive heat expansion from causing the undesired compression of said sealing gaskets 45 and 45′. According to the invention, this drawback is overcome by the lock ring 61, which is screwed and therefore held in a fixed position which, it being inserted in the groove 52 in the supporting bushing 50, prevents it from moving axially in either direction beyond the limits imposed on it by the clearance (g) indicated in figure 2. As already mentioned, the clearance (g) as shown in the figure is far greater than the actual clearance in the valve as built.

To summarise, the invention provides the following advantages:
On the one hand it allows the correct compression of the gaskets 45 and 45′ to be established once and for all at the time of assembly of the valve. At the time of tightening ring nuts 20 and 20′, this compression cannot be increased beyond the extent allowed by the clearance (g). It is worthwhile to stress that, depending on the type of plant in which the valve is installed, the value of the clearance (g) may be varied by altering the axial height of that part of the ring 61 which is housed inside the groove 52. For the same purpose, it is possible, vice versa, to vary the axial length of the groove 52. On the other hand, the lock ring 61 contrasts any positive heat expansion which might otherwise cause excessive tightening of the gaskets 45 and 45′, which might even cause the valve to jam.

It is also important to note that the internal end of the flange 15 extends towards the end of the valve body (20) in the form of a cylindrical flange 70 to create a ring-shaped opening 71 facing towards the outside of the valve. It is in the front end 16 of this cylindrical flange 70 that groove 17 is made. Groove 17 is capable of holding a sealing O-ring similar to or similarly positioned to the O-ring resting in the groove 17′ of the supporting bushing 50.

In addition to this, the annular space 71 makes it possible to construct a valve body with thicknesses of the same order of size, and this reduces wastages if the piece is obtained by casting or forming. Lastly, it must be noted that the gaskets 45 and 45′ are usually contained in a ring-shaped step; these gaskets have a practically trapezoid-shaped cross-section. This ring-shaped step has, therefore, in the known manner, a first cylindrical beating surface 82 and a second flat beating surface 83 in the shape of a circular rim. It follows that sealing of the gasket and the adaptability of the sliding surface against the outer surface of the ball-shaped plug 41 depend solely on the elastic characteristics of the material of the gasket. It is, however, well-known that high elasticity, meaning a high degree of compliance, usual contrasts with hardness and resistance to wear, unless particularly expensive materials are used. According to the invention, the flat beating surface 83 in the shape of a circular rim has a ring-shaped groove 84 containing an O-ring. In this way the gasket 45, 45′ acquires a greater elasticity due to the presence of the O-ring.

It should be noted that the gaskets 45 and 45′ are made of material having a low coefficient of friction, so as to facilitate rotation of the plug without increasing the tightening effort. Since a second source of friction is the torque developed by the sliding of the containing flange 49 of the stem 40 against the corresponding seat in the body of the valve 10, between said seat and said flange there is a washer made of antifriction material 48. As a consequence, on one hand the valve according to the invention prevents tightening pressures in excess of pre-established levels from being exerted on the gaskets 45 and 45′; on the other hand, at the same torque judged to be the best for rotating the plug 41, the tightening effort may be increased in order to improve the sealing capability of the valve, thanks to the presence of antifriction material for the gaskets 45 and 45′ and for the washer 48.

## Claims

1. Ball valve, of the type having a valve body (10) equipped with a radial hole for a stem (40) by which to operate a ball-shaped plug (41) through a diametrical duct (42); in which said valve body includes a bore (14) partly closed on one side of the valve body by an inner flange (15); said valve body (10) being threaded externally on both ends to engage tightenable ring nuts (20, 20′) which lock the flanged ends of two pipes (30, 30′) against the ends of the valve body; in which on the side opposite to the position of said inner radial flange (15) of the valve body (10) there is a supporting bushing (50) for a gasket (45′) pressed into contact with the plug (41); a second gasket (45) being provided between the plug (41) and said inner flange (15) of the valve body (10); in which, also, the end of the bore (14) of the valve body (10) opposite to the position of the inner flange (15) is threaded and engages a lock ring (61) screwed into said threaded part (60), characterised in that said lock ring (61) is housed with a part of its inner radial extension in a ring-shaped groove (52) made in the outer surface of the supporting bushing (50) and is cut along a line (103), with the purpose of allowing its introduction into the groove (52) of the supporting bushing (50) by elastic widening.

2. Ball valve according to claim 1, characterised by the fact that said supporting bushing (50) of the gasket (45′) has on its outer surface a further ring-shaped groove (53) capable of housing an O-ring which creates the seal between said supporting bushing (50) and the inner surface of the bore (14) of the valve body (10), in which said second groove (53) is more internal than the groove (52) in relation to the valve body (10).

3. Ball valve, according to the foregoing claims, characterised by the fact that the axially external base (62) of the lock ring (61) has two impressions capable of mating with the teeth of a suitable tool allowing it to be screwed inside the threaded part (60) of the bore (14) of the valve body (10).

4. Ball valve according to one or more of the foregoing claims, having a pair of sealing gaskets with a practically trapezoid-shaped radial cross-section (45, 45′) located between the flange (15), on one side and the plug (41), and, on the other, between the supporting bushing (50) and the same plug (41), inserted in a ring-shaped groove made in said flange (15) and in said supporting bushing (50) respectively, characterised by the fact that said ring-shaped grooves have a cylindrical beating surface (82) and a flat beating surface (83) in- the form of a circular rim; in which said beating surface (83) is in turn equipped with a ring-shaped groove (84), in which an O-ring is inserted, increasing the compliance of the gasket (45, 45′).

5. Ball valve according to the foregoing claims, characterised by the fact that the control stem (40) of the ball-shaped plug (41) has, above the spigot (44), a flange (49), the upper face of which slides on a gasket (48) with a low coefficient of friction arranged in a suitable seat in the valve body (10).

## Patentansprüche

1. Kugelventil der Ausführung mit einem Ventilgehäuse (10), das mit einer radialen Öffnung für eine Stange (40) ausgebildet ist, mit der ein kugelförmiger Verschlußkörper (41) mit einem diametralen Kanal (42) betätigbar ist; wobei das Ventilgehäuse eine Bohrung (14) aufweist, die durch einen inneren Flansch (15) an einer Seite des Ventilgehäuses teilweise verschlossen ist, welches Ventilgehäuse (10) an beiden Enden mit Außengewinde für den Eingriff anziehbarer Ringmuttern (20, 20′) versehen ist, die die Flanschenden zweier Rohre (30, 30′) gegen die Enden des Ventilgehäuses spannen; wobei an der der Position des inneren radialen Flansches (15) des Ventilgehäuses (10) gegenüberliegenden Seite eine Haltebuchse (50) für eine in Kontakt mit dem Verschlußkörper (41) gepreßte Dichtung (45′) angeordnet und eine zweite Dichtung (45) zwischen dem Verschlußkörper (41) und dem inneren Flansch (15) des Ventilgehäuses (10) vorgesehen ist; wobei ferner das der Position des inneren Flansches (15) gegenüberliegende Ende der Bohrung (14) des Ventilgehäuses (10) mit einem Gewinde versehen ist und in einen in den mit Gewinde versehenen Teil (60) eingeschraubten Verschlußring (61) eingreift; dadurch gekennzeichnet, daß der Verschlußring (61) mit einem Teil seiner inneren radialen Erstreckung in einer in der Außenfläche der Haltebuchse (50) ausgebildeten ringförmigen Nut (52) angeordnet und längs einer Linie (103) zu dem Zweck eingeschnitten ist, durch elastisches Aufweiten seine Einführung in die Nut (52) des Halteringes (50) zu ermöglichen.

2. Kugelventil nach Anspruch 1, dadurch gekennzeichnet, daß die Haltebuchse (50) der Dichtung (45′) an ihrer Außenfläche eine weitere ringförmige Nut (53) zur Aufnahme eines O-Ringes aufweist, der die Abdichtung zwischen der Haltebuchse (50) und der Innenfläche der Bohrung (14) des Ventilgehäuses (10) herstellt, wobei die zweite Nut (53) relativ zum Ventilgehäuse (10) weiter innen als die Nut (52) angeordnet ist.

3. Kugelventil nach den vorhergehenden Ansprüchen, dadurch gekennzeichnet, daß die axial äußere Basis (62) des Verschlußringes (61) zwei Vertiefungen zur Aufnahme der Zähne eines geeigneten Werkzeugs aufweist, die sein Einschrauben in den mit Gewinde versehenen Teil (60) der Bohrung (14) des Ventilgehäuses (10) ermöglichen.

4. Kugelventil nach einem oder mehreren der vorhergehenden Ansprüche, mit einem Paar abdichtender Dichtungen mit praktisch trapez- oder trapezoidförmigem radialen Querschnitt (45, 45′), deren eine zwischen dem Flansch (15) und dem Verschlußkörper (41) und deren andere zwischen der Haltebuchse (50) und dem Verschlußkörper (41) in einer in dem Flansch (15) bzw. der Haltebuchse (50) ausgebildeten ringförmigen Rille angeordnet ist, dadurch gekennzeichnet, daß die ringförmigen Rillen eine zylindrische Anschlagfläche (82) und eine ebene Anschlagfläche (83) in Form eines kreisrunden Vorsprungs aufweisen, wobei die Anschlagfläche (83) ihrerseits mit einer ringförmigen Rinne (84) ausgebildet ist, in die ein O-Ring eingesetzt ist, der die Anpassungsfähigkeit der Dichtung (45, 45′) erhöht.

5. Kugelventil nach den vorhergehenden Ansprüchen, dadurch gekennzeichnet, daß die Betätigungsstange (40) des kugelförmigen Verschlußkörpers (41) oberhalb des Zapfens (44) einen Flansch (49) aufweist, dessen obere Fläche auf einer in einem geeigneten Sitz im Ventilgehäuse (10) angeordneten Dichtung (48) mit einem niedrigen Reibungskoeffizienten gleitet.

## Revendications

1. Vanne à bille, du type comportant un corps de vanne (10) muni d'un trou radial destiné à une tige (40) par laquelle est actionné un obturateur (41) en forme de bille situé à travers une conduite diamétrale (42), dans laquelle ledit corps de vanne comporte un alésage (14) partiellement fermé sur un premier côté du corps de vanne par un rebord intérieur (15), ledit corps de vanne (10) étant fileté extérieurement aux deux extrémités pour venir en prise de manière pouvant être serrée avec des écrous annulaires (20, 20′) qui verrouillent les extrémités munies de rebords de deux tuyaux (30, 30′) contre les extrémités du corps de vanne, dans laquelle sur le côté opposé à la position dudit rebord radial intérieur (15) du corps de vanne (10) existe une bague de support (50) destinée à un joint (45′) appuyé en contact avec l'obturateur (41), un second joint (45) étant agencé entre l'obturateur (41) et ledit rebord intérieur (15) du corps de vanne (10), dans laquelle, aussi, l'extrémité de l'alésage (14) du corps de vanne (10) opposée à la position du rebord intérieur (15) est filetée et vient en prise avec un anneau de verrouillage (61) vissé sur ladite partie filetée (60), caractérisée en ce que ledit anneau de verrouillage (61) est reçu en ayant une partie de son étendue intérieure radiale située dans une gorge (52) en forme d'anneau réalisée dans la surface extérieure de la bague de support (50) et est découpé le long d'une ligne (103), dans le but de permettre son introduction à l'intérieur de la gorge (52) de la bague de support (50) par extension élastique.

2. Vanne à bille selon la revendication 1, caractérisée en ce que ladite bague de support (50) du joint (45′) a sur sa surface extérieure une autre gorge (53) en forme d'anneau capable de recevoir un joint torique qui assure l'étanchéité entre ladite bague de support (50) et la surface intérieure de l'alésage (14) du corps de vanne (10), dans laquelle ladite seconde gorge (53) est plus à l'intérieur que la gorge (52) par rapport au corps de vanne (10).

3. Vanne à bille selon l'une quelconque des revendications précédentes, caractérisée en ce que la base axialement extérieure (62) de l'anneau de verrouillage (61) comporte deux empreintes capables de correspondre avec les dents d'un outil adapté, lui permettant d'être vi-ssé à l'intérieur de la partie filetée (60) de l'alésage (14) du corps de vanne (10).

4. Vanne à bille selon l'une quelconque des revendications précédentes, comportant une paire de joints d'étanchéité ayant en pratique une coupe transversale radiale en forme de trapèze (45, 45′) situés d'un premier côté entre le rebord (15) et l'obturateur (41) et de l'autre côté entre la bague de support (50) et le même obturateur (41), insérés dans une gorge en forme d'anneau réalisée dans ledit rebord (15) et dans ladite bague de support (50) respectivement, caractérisée en ce que lesdites gorges en forme d'anneau ont une surface (82) cylindrique de portée ayant la forme d'un bord circulaire, ladite surface de portée (83) étant à son tour munie d'une gorge (84) en forme d'anneau, dans laquelle un joint torique est inséré, augmentant la capacité d'adaptation du joint (45, 45′).

5. Vanne à bille selon l'une quelconque des revendications précédentes, caractérisée en ce que la tige de commande (40) de l'obturateur (41) en forme de bille comporte, au dessus de l'emboîtement (44), un rebord (49), dont la face supérieure coulisse sur un joint (48) ayant un faible coefficient de friction, agencé dans un siège adapté du corps de vanne (10).
